# EUROPÄISCHE PATENTSCHRIFT

(11) **EP 0 640 820 B1**
(45) Veröffentlichungstag und Bekanntmachung des Hinweises auf die Patenterteilung: **16.04.1997**
(21) Anmeldenummer: 94113356.3
(22) Anmeldetag: 26.08.1994
(51) Int. Cl.: G01L 19/00

(54) **Druckmessanschluss für Gasregelgeräte**
Pressure measuring connection for gas adjusting devices
Connection de mesure de pression pour appareils de réglage de gaz

(30) Priorität: 31.08.1993 DE 9313057 U
(43) Veröffentlichungstag der Anmeldung: 01.03.1995
(73) Patentinhaber: HONEYWELL B.V., NL-1101 EA Amsterdam Z.O. (NL)
(72) Erfinder: Munsterhuis, Wim, NL-7751 GP Dalen (NL)
(74) Vertreter: Rentzsch, Heinz, Dipl.-Ing.

(56) Entgegenhaltungen:
- EP-A- 0 060 442
- DE-C- 930 895
- DE-C- 952 570
- PRODUCT ENGINEERING, Bd. 38, Nr. 12, 5. Juni 1967, New York US, Seite 156; 'Miniature Bleeder Valve'

## Beschreibung

Es ist bekannt, an Gasregelgeräten einen Druckmeßanschluß in Form eines rohrförmigen Stutzens vorzusehen, der bei Nichtgebrauch durch eine Schraube verschlossen wird und auf den das Ende eines zu einem Druckmeßgerät führenden Meßschlauchs aufschiebbar ist. Werden bei der Einstellung eines solchen Gasregelgerätes nach dessen Installation Druckmessungen vorgenommen, so geht bisweilen die während der Druckmessung herausgeschraubte Verschlußschraube verloren.

Mit der im Anspruch 1 gekennzeichneten Erfindung wird dies dadurch vermieden, daß die Verschlußschraube während der Messung nicht vollständig herausgeschraubt zu werden braucht, sondern lediglich gelockert wird. Vorteilhafte Ausgestaltungen der Erfindung ergeben sich aus den Unteransprüchen. Obwohl die die Gasdurchlaßkanäle bildenden Gewindeunterbrechungen entweder im Schraubengewinde oder im Innengewinde des Druckmeßstutzens vorgesehen sein können, ist deren Anbringung im Druckmeßstutzen fertigungstechisch günstiger, weil dieser beim Spritzgießen des Reglergehäuses einstückig mit diesem hergestellt und dabei zugleich im selben Spritzvorgang das mit Unterbrechungen versehene Innengewinde vorgesehen werden kann. Eine üblicherweise als Rundteil hergestellte Verschlußschraube hingegen müßte nachträglich mechanisch bearbeitet werden, um die Gewindeunterbrechungen entstehen zu lassen.

Aus einer Anzeige "Miniature Bleeder Valve" in der Zeitschrift PRODUCT ENGINEERING vom 4. Juni 1967, New York, USA, Seite 156, ist ein Entlüftungsventil für Hydraulikanlagen bekannt, bei dem ein rohrförmiger Stutzen ein Innengewinde zur Aufnahme einer Schraube sowie an seinem Ende einen nach Innen gerichteten Kragen aufweist. Dieser wirkt mit einer als Dichtkörper wirkenden Kugel zusammen, welche bei gelockerter Schraube zwischen deren Stirnseite und dem genannten Kragen beweglich ist. Ein Längsschlitz in der Schraube ermöglicht den Luftdurchtritt beim Entlüften.

Die Erfindung wird nachfolgend anhand von drei in den Zeichnungen wiedergegebenen Ausführungsbeispielen erläutert. Dabei zeigt:
- Figur 1a: einen Schnitt durch einen den Druckmeßstutzen aufweisenden Gehäuseteil mit eingesetzter Verschlußschraube;
- Figur 1b: eine Draufsicht auf den Meßstutzen bei entfernter Druckmeßschraube;
- Figur 2: eine ähnliche Ausführungsform, bei welcher jedoch die abdichtende Sitzfläche der Druckmeßschraube um etwa die Höhe des Schraubenkopfes im Meßstutzen versenkt ist;
- Figur 3: eine der Figur 1a ähnliche Darstellung des Meßstutzens ohne eingesetzte Verschlußschraube, wobei hier das Innengewinde an drei gleichmäßig über den Umfang verteilten Stellen axial unterbrochen ist; und
- Figur 3a: einen Schnitt durch Figur 3 in Höhe der Linie A-A.

In Figur 1a ist der Meßstutzen 1 unmittelbar an das Gehäuse 2 angegossen. Der Innenraum 3 des Meßstutzens 1 steht über eine Bohrung 4 mit einer nicht dargestellten Gehäusekammer in Verbindung, deren Druck gemessen werden soll. Der Meßstutzen 1 ist durch eine Verschlußschraube 5 verschlossen, welche an der dem Gewindeteil 6 zugewandten Unterseite des Schraubenkopfes 7 eine abgeschrägte Umlauffläche 8 aufweist, welche an einer umlaufenden Sitzfläche 9 am offenen Ende des Anschlußstutzens 1 abdichtend anliegt. Auf die äußere Zylinderfläche 10 des Anschlußstutzens 1 kann ein zu einem Meßgerät führender Meßschlauch aufgeschoben werden.

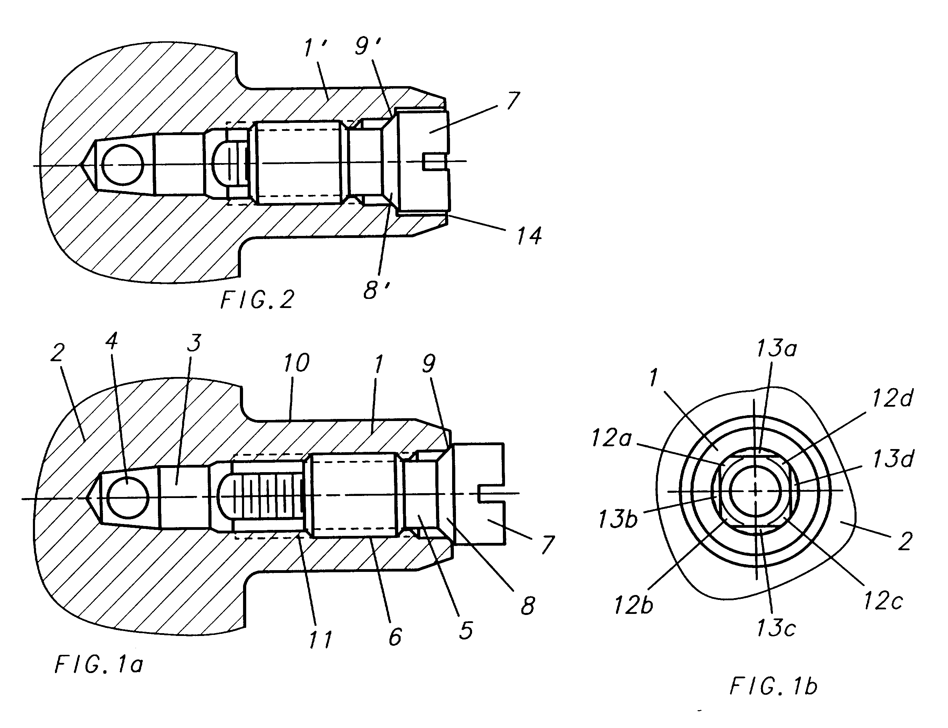

Die Verschlußschraube 5 ist mit einem in Umfangsrichtung geschlossenen Gewindeteil 6 versehen. Das Innengewinde 11 des Anschlußstutzens 1 hingegen ist, wie Figur 1b erkennen läßt, nach Art eines Vierkants an vier in Umfangsrichtung um 90° versetzten Stellen 12a bis 12d unterbrochen, so daß es aus vier zwischen diesen Unterbrechungen liegenden Gewindesegmenten 13a bis 13d besteht. Lockert man die Verschlußschraube 5, beispielsweise durch eine halbe Schraubenumdrehung, so daß die Abdichtung der Fläche 8 gegenüber dem Sitz 9 aufgehoben wird, so kann Gas von der Bohrung 4 durch den Innenraum 3 des Meßstutzens 1 längs der fluchtenden Gewindeunterbrechungen 12a bis 12d und durch den Spalt zwischen den Flächen 8 und 9 hindurch in den auf den Stutzen aufgeschobenen Meßschlauch und über diesen zu einem Druckmeßgerät gelangen. Da die Schraube nur gelockert, nicht aber herausgenommen zu werden braucht, ist sie während des Meßvorgangs unverlierbar aufgehoben.

Während bei der Ausführungsform nach Figur 1a der Schraubenkopf 7 auch bei geschlossenem Meßstutzen aus der Frontfläche des Meßstutzens 1 herausragt, ist bei der Ausführungsform nach Figur 2 die aus den umlaufenden Dichtflächen 8' und 9' bestehende Abdichtung gegenüber der Stirnseite des Meßstutzens 1' um etwa die Höhe des Schraubenkopfes 7 versenkt. Die Schraube ragt deshalb kaum über die Stirnfläche 14 des Meßstutzens heraus.

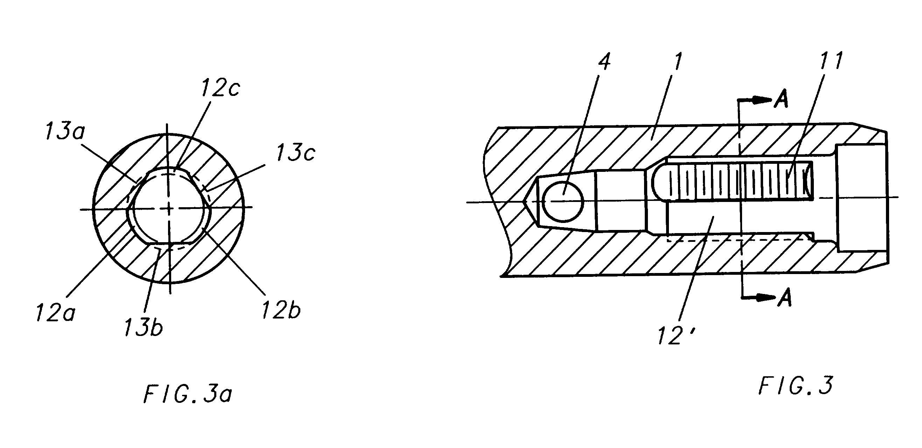

In den Figuren 1 und 2 hat das Innengewinde des Meßstutzens die Gestalt eines Vierkants. Bei der Ausführungsform nach Figur 3 sind statt dessen drei gleichmäßig über den Umfang verteilte Unterbrechungen 12' im Innengewinde 11 des Meßstutzens 1 vorgesehen, so daß hier drei Gasdurchlaßkanäle 12a, 12b, 12c entstehen, wie dies aus Figur 3a ersichtlich ist. Die Verschlußschraube hat die gleiche Gestalt wie in Figur 1a bzw. Figur 2.

Die Steilheit des Gewindes 6, 11 ist so gewählt, daß eine halbe Umdrehung der Verschlußschraube 5 genügt, um den Durchlaß zwischen den Flächen 8 und 9 für die Druckmessung ausreichend zu öffnen. Die Schraube braucht deshalb nicht aus dem Stutzengewinde 11 entfernt zu werden, sondern bleibt auch während des Meßvorgangs, wenn auch gelockert, mit dem Innengewinde 11 im Eingriff und kann somit während der Messung nicht verloren gehen.

## Patentansprüche

1. Druckmeßanschluß für Gasregelgeräte mit einem zum Aufschieben eines Druckmeßschlauchs geeigneten rohrförmigen Stutzen (1), in dessen Innengewinde (11) eine Verschlußschraube (5) abdichtend einschraubbar ist, **dadurch gekennzeichnet**, daß das Innengewinde (11) mit in Achsrichtung fluchtenden Unterbrechungen (12) versehen ist, welche bei gelockerter, aber noch im Gewinde (11) gehaltener Verschlußschraube wenigstens einen axialen Gasdurchlaßkanal bilden.

2. Druckmeßanschluß nach Anspruch 1, **dadurch gekennzeichnet**, daß über den Gewindeumfang gleichmäßig verteilt wenigstens drei durch Gewindeunterbrechungen (12') gebildete Gasdurchlaßkanäle vorgesehen sind.

3. Druckmeßanschluß nach Anspruch 2, **dadurch gekennzeichnet**, daß über den Gewindeumfang gleichmäßig verteilt vier durch Gewindeunterbrechungen (12a bis 12d) gebildete Gasdurchlaßkanäle vorgesehen sind.

4. Druckmeßanschluß nach einem der Ansprüche 1 bis 3, **dadurch gekennzeichnet**, daß eine dem Gewindeteil (6) der Verschlußschraube (5) zugewandte umlaufende Fläche (8) des Schraubenkopfes (7) zusammen mit einer umlaufenden Sitzfläche (9) im Meßstutzen (1) bei angezogener Schraube einen abdichtenden Verschluß des Meßstutzens (1) bildet.

5. Druckmeßanschluß nach Anspruch 4, **dadurch gekennzeichnet**, daß die umlaufende Sitzfläche (9') um etwa die Schraubenkopfhöhe gegenüber dem Stutzenende (14) versenkt ist.

6. Druckmeßanschluß nach einem der Ansprüche 1 bis 5, **gekennzeichnet durch** eine solche Gewindesteilheit (6, 11), daß zum Öffnen der Durchlaßkanäle (12) eine halbe Umdrehung der Verschlußschraube (5) genügt.

## Claims

1. Pressure measuring tap for a gas control apparatus comprising a tube-shaped connection branch (1) suitable for pushing thereon a flexible pressure measuring tube and having an internal thread (11) into which a closure screw (5) can be screwed tightly, **characterized in that** said internal thread (11) has interruptions aligned in axial direction which, when said closure screw is loosened, but still is held in said thread, form at least one axial gas flow channel.

2. The pressure measuring tap of claim 1, **characterized in that** at least three gas flow channels formed by interruptions (12') of said thread are distributed uniformly around the circumference of said thread.

3. The pressure measuring tap of claim 2, **characterized in that** four gas flow channels formed by interruptions (12a to 12d) of said thread are distributed uniformly around the circumference of said thread.

4. The gas pressure measuring tap according to one of the claims 1 to 3,
**characterized in that** a circumferential surface (8) of the screw head (7), facing the threaded portion (6) ofthe closure screw (5), together with a circumferential seat surface (9) within said connecting branch (1) constitutes a sealed closure means of said connecting branch (1) when said screw is tightened.

5. The pressure measuring tap of claim 4, **characterized in that** said circumferential seat surface (9') is recessed with respect to the end (14) of said connecting branch by about the height of the screw head.

6. The pressure measuring tap according to one of the claims 1 to 5, **characterized by** such a steepness of the thread (6, 11) that for opening the flow channels (12) a half turn of said closure screw (5) is sufficient.

## Revendications

1. Raccord de mesure de pression pour des appareils de régulation de gaz comportant un embout tubulaire (1), qui convient pour y emmancher un tuyau de mesure de pression et dans le taraudage (11) duquel peut être vissée, d'une manière étanche, une vis de fermeture (5), caractérisé en ce que le taraudage (11) comporte des interruptions (12) alignées dans la direction axiale, qui forment au moins un canal axial de passage de gaz, lorsque la vis de fermeture est desserrée, mais est encore retenue dans le taraudage (11).

2. Raccord de mesure de pression selon la revendication 1, caractérisé en ce qu'il est prévu au moins trois canaux de passage de gaz, formés par des interruptions (12') du taraudage, ces canaux étant uniformément répartis sur la périphérie du taraudage.

3. Raccord de mesure de pression selon la revendication 2, caractérisé en ce qu'il est prévu quatre canaux de passage de gaz, formés par des interruptions (12a à 12d) du taraudage, ces canaux étant uniformément répartis sur la périphérie du taraudage.

4. Raccord de mesure de pression selon l'une des revendications 1 à 3, caractérisé en ce qu'une surface circonférentielle (8) de la tête (7) de la vis, qui est tournée vers la partie filetée (6) de la vis de fermeture (5), forme, conjointement avec une surface d'appui circonférentielle (9) dans l'embout de mesure (1), une fermeture étanche de l'embout de mesure (1), lorsque la vis est serrée.

5. Raccord de mesure de pression selon la revendication 4, caractérisé en ce que la surface circonférentielle d'appui (9') est en renfoncement, approximativement de la hauteur de la tête de la vis, par rapport à l'extrémité (14) de l'embout.

6. Raccord de mesure de pression selon l'une des revendications 1 à 5, caractérisé par un pas de filetage (6,11) qui est tel que pour ouvrir les canaux de passage (12), une demi-rotation de la vis de fermeture (5) est suffisante.
